# EUROPÄISCHE PATENTSCHRIFT

(11) **EP 2 184 846 B1**
(45) Veröffentlichungstag und Bekanntmachung des Hinweises auf die Patenterteilung: **09.09.2020**
(21) Anmeldenummer: 09013928.8
(22) Anmeldetag: 06.11.2009
(51) Int. Cl.: H02P 1/02, H02P 3/22, H02P 6/24

(54) **Verfahren zum Betrieben eines Elektromotors**
Method for operating an electric motor
Procédé destiné au fonctionnement d'un moteur électrique

(30) Priorität: 07.11.2008 DE 102008056321; 26.02.2009 DE 102009010408
(43) Veröffentlichungstag der Anmeldung: 12.05.2010
(73) Patentinhaber: Diehl AKO Stiftung & Co. KG, 88239 Wangen (DE)
(72) Erfinder: Weinmann, Martin, 88339 Bad Waldsee (DE); Zeh, Stefan, 88239 Wangen (DE); Frisch, Rainer, 88239 Wangen (DE); Wauer, Hartmut, 88353 Kisslegg (DE); Olarescu, Nicola-Valeriu, 88239 Wangen (DE); Rieser, Martin, 88239 Wangen (DE); Florea, Radu Liviu, Dr., 90478 Nürnberg (DE)
(74) Vertreter: Diehl Patentabteilung

(56) Entgegenhaltungen:
- EP-A1- 0 690 556
- EP-A2- 0 247 994
- DE-A1- 19 650 403
- JP-A- 2002 199 744
- JP-A- 2006 181 008
- US-A1- 2006 132 084

## Beschreibung

Die vorliegende Erfindung betrifft ein Verfahren zum Betreiben eines Elektromotors, das eine Stillstandserkennung des Elektromotors beinhaltet.

Aufgrund der Masse der drehenden Teile eines Elektromotors sowie des von diesem angetriebenen Bauteils läuft ein Elektromotor nach dem Ausschalten grundsätzlich noch eine gewissen Zeit nach. Für verschiedene Anwendungen ist diese Eigenschaft unerwünscht. Elektromotoren werden deshalb häufig mit einem Bremsmechanismus ausgestaltet.

Neben dem Vorsehen einer mechanischen Bremse ist es auch bekannt, Elektromotoren nach dem Ausschalten durch eine Kurzschlussbremsung abzubremsen. Nach Wegfall der Betriebsspannung geht der Elektromotor bei weiterer Rotation in den Generatorbetrieb über. Werden die Motorklemmen des Elektromotors kurzgeschlossen, so wird die nach dem Ausschalten verbliebene mechanische Rotationsenergie durch die Kurzschlussleistung verbraucht und der Elektromotor kommt innerhalb kurzer Zeit zum Stillstand.

Bei vielen elektromotorisch betriebenen Geräten, insbesondere auch im Haushaltsbereich, wie zum Beispiel bei Wäschebehandlungsgeräten, Zentrifugen, Küchenmaschinen und dergleichen, werden aus Gründen der Energieeffizienz sowie der Gewichts- und Rohstoffeinsparung verstärkt elektronisch kommutierte und über Permanentmagnet erregte Motoren eingesetzt. Durch den Einsatz leistungsfähiger Controller werden diese Antriebe zunehmend ohne Sensoren geregelt.

Aus Sicherheitsgründen wird jedoch auch in diesen Fällen zur sicheren Stillstandserkennung weiterhin ein Drehzahlsensor benutzt. Solche Drehzahlsensoren bedeuten jedoch hohe zusätzliche Kosten, insbesondere durch ihren Montage- und Verdrahtungsaufwand. Des Weiteren sind diese Sensoren häufig empfindlich und Ursache für Geräteausfälle. Die genannten Nachteile fallen insbesondere bei Massenartikeln ins Gewicht, zu denen die oben genannten Haushaltsgeräte gehören.

Die EP 0 690 556 A1 offenbart ein Verfahren und eine Vorrichtung zur Stillstandserkennung beim Wiederanlassen eines stromrichtergespeisten Drehstrommotors ohne Drehzahlgeber, auf denen der Oberbegriff des Anspruchs 1 basiert.

Der Erfindung liegt die Aufgabe zugrunde, ein verbessertes Verfahren zum Betreiben eines Elektromotors zu schaffen, bei welchem eine sichere Stillstandserkennung ohne den Einsatz von Drehzahlsensoren erzielt wird.

Diese Aufgabe wird durch ein Verfahren zum Betreiben eines Elektromotors mit den Merkmalen des Anspruchs 1 gelöst. Vorteilhafte Ausgestaltungen und Weiterbildungen der Erfindung sind Gegenstand der abhängigen Ansprüche.

Das erfindungsgemäße Verfahren zum Betreiben eines Elektromotors mit wenigstens zwei Motorklemmen, die über eine Steuereinrichtung angesteuert werden, enthält die folgenden Schritte:
a) Kurzschließen von wenigstens zwei der Motorklemmen des Elektromotors durch die Steuereinrichtung;
b) Messen der Motorphasenströme an den kurzgeschlossenen Motorklemmen;
c) Erkennen eines Stillstandes des Elektromotors, falls eine Größe und/oder eine Frequenz der in Schritt b) gemessenen Motorphasenströme unter einem vorgegebenen Grenzwert liegt; und
d) Erzeugen eines Freigabesignals, wenn in Schritt c) ein Stillstand des Elektromotors erkannt worden ist, wobei dieses Freigabesignal bei einem Reset des Elektromotors und/oder seiner Steuereinrichtung zurückgesetzt wird und zurückgesetzt wird, wenn der Elektromotor nach dem Stillstand wieder gedreht wird, sofern der Elektromotor nach dem Stillstand mit einer Drehzahl oberhalb eines vorgegebenen Grenzwerts wieder gedreht wird.

Das Verfahren benutzt zunächst die oben beschriebene Kurzschlussbremsung des Elektromotors, bei welcher wenigstens zwei der Motorklemmen des Elektromotors kurzgeschlossen werden, um die Zeit des Elektromotors bis zu seinem Stillstand nach dem Ausschalten zu verkürzen. Um sicherzustellen, dass der Elektromotor stillsteht bzw. seine Drehzahl unterhalb eines kritischen Grenzwerts liegt, werden dann die Motorphasenströme an den kurzgeschlossenen Motorklemmen gemessen und ein Stillstand des Elektromotors nur dann erkannt, wenn eine Größe und/oder eine Frequenz der so gemessenen Motorphasenströme unter einem vorgegebenen Grenzwert liegt. Die an den kurzgeschlossenen Motorklemmen gemessenen Motorphasenströme sind ein Maß für die von dem Elektromotor im generatorischen Betrieb in den Zuleitungen induzierten Ströme und damit für die noch vorhandene Drehzahl des Elektromotors.

Das Verfahren benötigt keine speziellen und kostenintensiven Drehzahlsensoren, sondern nur geeignete Strommessmittel, die in der Steuereinrichtung in vielen Fällen ohnehin bereits vorhanden sind. Dieses Verfahren ermöglicht somit eine sichere Stillstandserkennung des Elektromotors ohne zusätzliche Komponenten wie zum Beispiel Drehzahlsensoren.

Mit dem vorgeschlagenen Verfahren können in vorteilhafter Weise Elektromotoren betrieben werden, die Geräte antreiben, welche für einen Benutzer nur dann zugänglich sein dürfen, wenn ihre Drehzahl unterhalb eines kritischen Grenzwerts liegt. Als veranschaulichendes Beispiel sei in diesem Zusammenhang ein Wäschebehandlungsgerät (Waschmaschine, Trockner, Waschtrockner) mit einer von einem Elektromotor angetriebenen Wäschetrommel genannt.

Bei dem Elektromotor kann es sich entweder um einen Gleichstrommotor oder um einen Wechselstrommotor handeln. Die hier vorgeschlagene Lösung kann grundsätzlich für alle Arten von Wechselstrommotoren eingesetzt werden, die eine magnetische Erregung benutzen, d.h. beispielsweise bei elektronisch kommutierten Gleichstrommotoren, Schrittmotoren und Synchronmotoren, die jeweils einen Permanentmagneten einsetzen, oder bei Reluktanzmotoren und Schrittmotoren, die eine Magnetisierung eines Eisenrotors benutzen. Außerdem ist der Elektromotor nicht auf eine bestimmte Anzahl von Motorphasen beschränkt, auch wenn unten ein Ausführungsbeispiel mit einem dreiphasigen Elektromotor näher erläutert wird.

Unter dem "Kurzschließen" von Motorklemmen des Elektromotors wird ein Schaltungszustand verstanden, bei dem eine Differenzspannung zwischen den jeweiligen Motorklemmen Null ist oder zumindest auf eine möglichst kleine Spannung gesteuert wird, d.h. unterhalb eines vorgegebenen Spannungsgrenzwerts liegt. Das absolute Spannungspotential der besagten Motorklemmen in Bezug auf einen Pol der Steuereinrichtung muss dabei nicht notwendigerweise zeitlich konstant sein. Es muss lediglich sichergestellt werden, dass die betreffende Differenzspannung zu jedem Zeitpunkt unter dem vorgegebenen Spannungsgrenzwert liegt.

Der "Stillstand" des Elektromotors bedeutet, dass die Drehzahl des Elektromotors Null ist bzw. möglichst klein ist, d.h. unterhalb eines vorgegebenen kritischen Grenzwerts liegt.

In einer bevorzugten Ausführungsform der Erfindung können in Schritt a) auch alle Motorklemmen des Elektromotors durch die Steuereinrichtung kurzgeschlossen werden.

Als Größe der Motorphasenströme kann im Verfahrensschritt c) zum Beispiel deren Effektivwert oder deren Mittelwert innerhalb eines Messfensters verwendet werden.

Zur Verbesserung der Zuverlässigkeit der Stillstandserkennung kann es zudem vorteilhaft sein, wenn das Messen der Motorphasenströme in Verfahrensschritt b) während eines Messfensters durchgeführt wird, welches mindestens so groß ist wie eine Periodendauer einer höchsten noch unkritischen Motordrehzahl.

In einer weiteren Ausgestaltung der Erfindung kann das Erkennen des Stillstandes des Elektromotors in Schritt c) nur dann erfolgen, falls die Summe aller in Schritt b) gemessenen Motorphasenströme im Wesentlichen gleich Null ist. Durch diese Prüfung, ob die Summe aller gemessenen Motorphasenströme im Wesentlichen gleich Null ist, wird die Funktionalität der Strommessung selbst überprüft. Ist die besagte Summe nicht im Wesentlichen gleich Null, so ist mindestens eine Strommessung bzw. das entsprechende Strommessmittel fehlerhaft. In diesem Fall kann zum Beispiel ein entsprechendes Fehlersignal ausgegeben werden und/oder weitere Schritte, die nur bei einem Stillstand des Elektromotors zugelassen werden dürfen, unterbunden werden.

In einer Ausgestaltung der Erfindung kann die Steuereinrichtung des Elektromotors einen Frequenzumrichter mit einem Spannungszwischenkreis aufweisen und können die Motorphasenströme in einem Brückenzweig dieses Spannungszwischenkreises gemessen werden. Während der Messung der Motorphasenströme in Verfahrensschritt b) können die Motorklemmen dann zum Beispiel auf einen Pol (Minuspol oder Pluspol) des Spannungszwischenkreises geklemmt werden.

Vorzugsweise können die Motorklemmen während der Messung der Motorphasenströme in Verfahrensschritt b) auf den Pol des Spannungszwischenkreises geklemmt werden, der mit dem Brückenzweig des Spannungszwischenkreises verbunden ist, in dem die Motorphasenströme gemessen werden.

Zur Verbesserung der Genauigkeit der Stillstandserkennung können die zur Messung der Motorphasenströme eingesetzten Strommessmittel abgeglichen werden. Um auch sehr kleine Ströme detektieren zu können, ist es von Vorteil, die Strommessmittel bei Nullstrom abzugleichen. Hierzu wird vorgeschlagen, die Motorklemmen zum Abgleichen der Strommessmittel auf den Pol des Spannungszwischenkreises zu klemmen, der mit dem Brückenzweig des Spannungszwischenkreises verbunden ist, in dem die Motorphasenströme nicht gemessen werden.

In einer noch weiteren Ausgestaltung der Erfindung kann die zur Stillstandserkennung benutzte Frequenz der Motorphasenströme in Verfahrensschritt c) in einer oder in mehreren Motorphasen oder aus einem zeitlichen Abstand von mindestens zwei Strommesspunkten zwischen mindestens zwei Motorphasen bestimmt werden. Eine schnellere Auswertung der Stromfrequenz erfolgt im Allgemeinen durch die Auswertung mehrerer Phasen.

Erfindungsgemäß wird ferner ein Freigabesignal erzeugt, wenn in Verfahrensschritt c) ein Stillstand des Elektromotors erkannt worden ist. Dieses Freigabesignal wird einerseits bei einem Reset des Elektromotors und/oder seiner Steuereinrichtung zurückgesetzt und andererseits zurückgesetzt, wenn der Elektromotor nach dem Stillstand wieder gedreht wird.

Da elektronisch kommutierte Motoren nicht schneller drehen können als durch die elektrische Drehfeldfrequenz vorgegeben, kann es ausreichend sein, die Stillstandserkennung nur nach Rückkehr des Elektromotors aus einer überkritischen Drehzahl oder nach einem Power On Reset der Steuereinrichtung durchzuführen. Die Zugriffsfreigabe bleibt dann so lange erhalten wie keine elektrischen Drehfeldfrequenzen mit überkritischen Drehzahlen generiert werden. Bei Waschmaschinen beträgt diese kritische Drehzahl zum Beispiel 60 Trommelumdrehungen pro Minute. Da die Waschdrehzahlen zumeist im Bereich bis 50 U/min liegen, muss die Zugriffsberechtigung bei dieser Anwendung zum Beispiel nur bei einer Rückkehr von einer Schleuderdrehzahl und nach dem Power On Reset des Controllers nach dem hier vorgeschlagenen Verfahren geprüft werden.

Obige sowie weitere Merkmale, Vorteile und Anwendungsmöglichkeiten der Erfindung werden aus der nachfolgenden Beschreibung eines bevorzugten, nichteinschränkenden Ausführungsbeispiels unter Bezugnahme auf die beiliegenden Zeichnungen besser verständlich. Darin zeigen
- Fig. 1: eine schematische Darstellung des Schaltungsaufbaus eines beispielhaften Elektromotors, bei dem das Verfahren der Erfindung eingesetzt werden kann; und
- Fig. 2: ein zeitlichen Verlauf der Motorspannungen an den Motorklemmen während des Kurzschließens der Motorklemmen des Elektromotors von Figur 1.

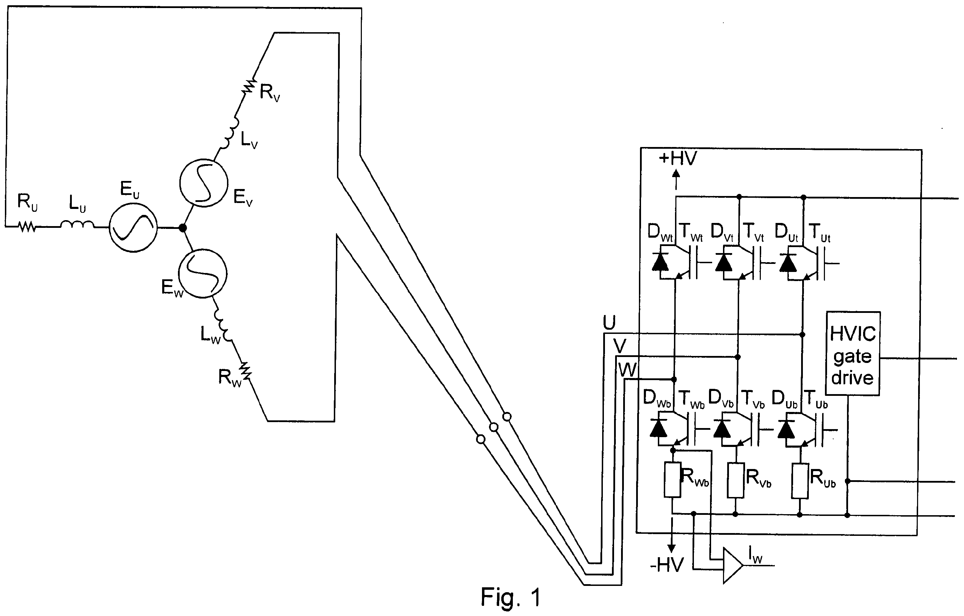

Bei dem in Figur 1 gezeigten Schaltungsaufbau handelt es sich um einen dreiphasigen, über Permanentmagnet erregten Elektromotor, wie er zum Beispiel in Wäschebehandlungsgeräten (Waschmaschinen, Trockner, Waschtrockner) zum Antreiben der Wäschetrommel verwendet werden kann. Da der Benutzer des Wäschebehandlungsgeräts aus Sicherheitsgründen keinen Zugriff auf die Wäschetrommel haben darf, wird eine Stillstandserkennung eingesetzt und eine Zugriffsberechtigung auf die Wäschetrommel nur dann freigeschaltet, wenn auf einen Stillstand des Elektromotors erkannt worden ist. Das Verfahren der Erfindung soll aber nicht nur auf diese Anwendung beschränkt sein.

Wie in Figur 1 beispielhaft veranschaulicht, hat der Elektromotor drei sternförmig geschaltete Phasen U, V, W. In dem Ersatzschaltbild sind die Motorwiderstände R_{U}, R_{V}, R_{W} und die Motorinduktivitäten L_{U}, L_{V}, L_{W} der Motorphasen U, V und W eingezeichnet. Außerdem sind die im Stator des Elektromotors durch den Rotor (Permanentmagnet) induzierten Spannungen E_{U}, E_{V}, E_{W} für die drei Motorphasen U, V und W angedeutet.

Der Elektromotor besitzt drei Motorklemmen U, V, W entsprechend seinen drei Motorphasen U, V und W. Die Steuereinrichtung (z.B. Controller) S steuert den Elektromotor über diese drei Motorklemmen U, V, W an. Die Steuereinrichtung S weist insbesondere einen Frequenzumrichter mit einem Spannungszwischenkreis auf. Wie in der Figur dargestellt, ist dieser Spannungszwischenkreis in bekannter Weise aus einer Halbbrückenschaltung aufgebaut, die einen mit einem Minuspol -HV verbundenen unteren Halbbrückenzweig und einen mit einem Pluspol +HV des Spannungszwischenkreises verbundenen oberen Halbbrückenzweig aufweist. Die Aufbauten der Steuereinrichtung S und des Spannungszwischenkreises sind aber nicht nur auf diese Ausführungsformen beschränkt.

Jede der Motorklemmen U, V, W ist über einen ersten Schalter (z.B. Transistor) T_{Ub}, T_{Vb}, T_{Wb} des unteren Halbbrückenzweiges mit dem Minuspol -HV des Spannungszwischenkreises verbunden und über einen zweiten Schalter (z.B. Transistor) T_{Ut}, T_{Vt}, T_{Wt} des oberen Halbbrückenzweiges mit dem Pluspol +HV des Spannungszwischenkreises verbunden. Parallel zu diesen ersten und zweiten Schaltern T_{Ub}, T_{Vb}, T_{Wb}, T_{Ut}, T_{Vt}, T_{Wt} (nachfolgend allgemein mit T bezeichnet) ist jeweils eine entsprechende Freilaufdiode D_{Ub}, D_{Vb}, D_{Wb}, D_{Ut}, D_{Vt}, D_{Wt} (nachfolgend allgemein mit D bezeichnet) geschaltet.

Zum Abbremsen des Elektromotors werden die Motorklemmen U, V, W mittels der Schalter T des Spannungszwischenkreises kurzgeschlossen. D.h. die Motorklemmen U, V, W befinden sich zu jedem Zeitpunkt jeweils auf dem gleichen Spannungspotential, d.h. vorzugsweise dem Pluspol +HV oder dem Minuspol - HV des Spannungszwischenkreises.

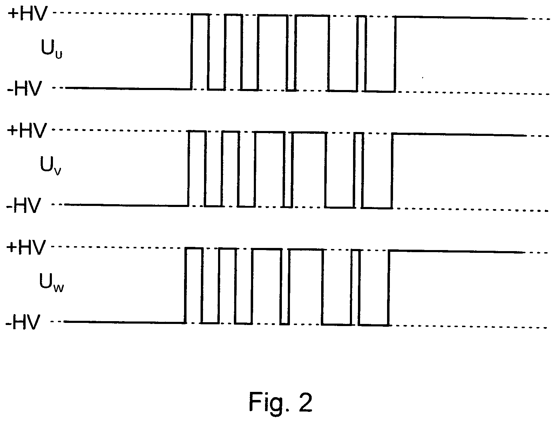

Das Kurzschließen der Motorklemmen U, V, W kann erfolgen, indem alle Motorklemmen mit dem Minuspol -HV oder mit dem Pluspol +HV des Spannungszwischenkreises verbunden werden. Das absolute Spannungspotential der Motorklemmen in Bezug auf einen Pol des Spannungszwischenkreises muss dabei aber nicht notwendigerweise zeitlich konstant sein. Es muss lediglich sichergestellt werden, dass zu jedem Zeitpunkt die Differenzspannung zwischen den kurzzuschließenden Motorklemmen U, V, W möglichst klein bzw. Null ist. Dies ist beispielhaft in Figur 2 veranschaulicht, in der die Motorspannungen U_{U}, U_{V}, U_{W} an den Motorklemmen U, V, W gegenüber der Zeit aufgetragen sind.

In der unteren Halbbrücke ist ferner jede der Motorklemmen U, V, W über einen Messwiderstand R_{Ub}, R_{Vb}, R_{Wb} mit dem Minuspol -HV des Spannungszwischenkreises. Über diese Messwiderstände R_{Ub}, R_{Vb}, R_{Wb} können die jeweiligen Motorphasenströme I_{U}, I_{V}, I_{W} mittels geeigneter Strommessmittel M_{U}, M_{V}, M_{W} erfasst werden. Der besseren Übersichtlichkeit halber ist in Figur 1 nur das Strommessmittel M_{W} zum Erfassen des Motorphasenstroms I_{W} an der Motorklemme W dargestellt.

Um einen Stillstand des Elektromotors sicher beurteilen zu können, werden nach dem obigen Kurzschließen der Motorklemmen U, V und W (Verfahrensschritt a) der Erfindung) die Motorphasenströme I_{U}, I_{V}, I_{W} während eines Messfensters gemessen. Die Länge dieses Messfensters ist vorzugsweise mindestens so groß wie die Periodendauer der höchsten noch unkritischen Motordrehzahl des Elektromotors.

Aus den gemessenen Motorphasenströmen I_{U}, I_{V}, I_{W} an den kurzgeschlossenen Motorklemmen U, V, W werden dann eine Größe und/oder eine Frequenz dieser Motorphasenströme ermittelt. Als Größe der Motorphasenströme I_{U}, I_{V}, I_{W} können beispielsweise deren Effektivwerte oder deren Mittelwerte verwendet werden. Die Frequenz der Motorphasenströme I_{U}, I_{V}, I_{W} kann zum Beispiel in einer Motorphase, in zwei Motorphasen oder in allen Motorphasen bestimmt werden. Als weitere Alternative ist es auch möglich, die Motordrehzahl aus dem zeitlichen Abstand von mindestens zwei Strommesspunkten (z.B. Nulldurchgänge) zwischen mindestens zwei Motorphasen zu bestimmen. Durch die Auswertung mehrerer Phasen kann eine schnellere Auswertung der Stromfrequenz erreicht werden.

Da die Motorphasenströme I_{U}, I_{V}, I_{W} an den kurzgeschlossenen Motorklemmen U, V, W ein Maß für die von dem Elektromotor im generatorischen Betrieb in den Zuleitungen induzierten Ströme und damit für die noch vorhandene Drehzahl des Elektromotors. Sinken die Größe und/oder die Frequenz der Motorphasenströme an den kurzgeschlossenen Motorklemmen U, V, W unter einen vorgegebenen Grenzwert, so kann daraus geschlossen werden, dass die Drehzahl des Elektromotors unterhalb einer kritischen Drehzahl liegt, was als "Stillstand" bezeichnet wird.

Im Fall des Erkennens eines solchen Stillstandes des Elektromotors erzeugt die Steuereinrichtung S ein Freigabesignal. Bei Anwesenheit dieses Freigabesignals kann dann zum Beispiel eine Zugangsberechtigung zu einem von dem Elektromotor angetriebenen Gerät (z.B. eine Wäschetrommel einer Waschmaschine) freigeschaltet werden, da der Zugriff durch den Benutzer ungefährlich ist.

Da elektronisch kommutierte Motoren nicht schneller drehen können als durch die elektrische Drehfeldfrequenz vorgegeben, ist es ausreichend, die oben beschriebene Stillstandserkennung nur nach Rückkehr des Elektromotors aus einer überkritischen Drehzahl oder nach einem Power On Reset der Steuereinrichtung S durchzuführen. Die Zugriffsfreigabe bleibt dann so lange erhalten wie keine elektrischen Drehfeldfrequenzen mit überkritischen Drehzahlen generiert werden. Bei Waschmaschinen beträgt diese kritische Drehzahl zum Beispiel 60 Trommelumdrehungen pro Minute. Da die Waschdrehzahlen zumeist im Bereich bis 50 U/min und somit unterhalb dieser kritischen Drehzahl liegen, kann die Zugriffsberechtigung ohne weitere Stillstandserkennungsvorgänge aufrechterhalten bleiben, sofern mit dem Elektromotor keine überkritischen Drehzahlen angefahren werden. Die Zugriffsberechtigung muss dann zum Beispiel nur bei einer Rückkehr von einer Schleuderdrehzahl und nach dem Power On Reset des Controllers nach dem hier vorgeschlagenen Verfahren geprüft werden.

Um die Sicherheit bei der Stillstandserkennung weiter zu erhöhen, ist es von Vorteil, wenn während des Stillstandserkennungsvorganges zusätzlich die Funktionalität der Strommessung selbst überprüft wird. Dies kann beispielsweise dadurch erfolgen, dass nach dem Kurzschließen der Motorklemmen U, V, W geprüft wird, ob die Summe der Motorphasenströme während des Messfensters zu jedem Zeitpunkt im Wesentlichen gleich Null ist. Ist dies nicht der Fall, so muss davon ausgegangen werden, dass wenigstens eines der Strommessmittel Mu, Mv, Mw der Halbbrücke fehlerhaft ist. Das Erzeugen des Freigabesignals kann in einem solchen Fall unterbunden werden.

Zur Erhöhung der Genauigkeit des Verfahrens ist es ferner von Vorteil, die Strommessmittel Mu, Mv, Mw abzugleichen. Um auch sehr kleine Motorphasenströme I_{U}, I_{V}, I_{W} detektieren zu können, werden die Strommessmittel bevorzugt bei Nullstrom abgeglichen (so genannter DC Offset - Abgleich). Dies kann zum Beispiel erfolgen, während der entsprechende Motorphasenstrom auf den Pluspol +HV des Spannungszwischenkreises fließt, d.h. der Schalter T_{Ut}, T_{Vt}, T_{Wt} oder die entsprechende Freilaufdiode D_{Ut}, D_{Vt}, D_{Wt} in der oberen Halbbrücke des Spannungszwischenkreises den Strom leitet.

Die vorliegende Erfindung ist natürlich nicht nur auf die hier beschriebene Ausführungsform beschränkt. Der Fachmann wird problemlos verschiedene Abwandlungen und Modifikationen erkennen, die innerhalb des durch die anhängenden Ansprüche definierten Schutzumfangs liegen.

Während in dem obigen Ausführungsbeispiel im Verfahrensschritt a) alle Motorklemmen des Elektromotors kurzgeschlossen worden sind, ist es ebenso möglich, nur wenigstens zwei der Motorklemmen kurzzuschließen und die Strommessungen zur Stillstandserkennung nur an diesen kurzgeschlossenen Motorklemmen durchzuführen.

Weiter stellt die oben beschriebene Anordnung zum Messen der Motorphasenströme mit den Messwiderständern und den Strommessmitteln in der unteren Halbbrücke des Spannungszwischenkreises einen besonders einfachen und kostengünstigen Schaltungsaufbau dar. Selbstverständlich können aber auch andere Maßnahmen zum Messen der Motorphasenströme an den kurzgeschlossenen Motorklemmen getroffen werden. Insbesondere sind auch Strommessungen in der oberen Halbbrücke oder in beiden Halbbrücken des Spannungszwischenkreises möglich.

## Patentansprüche

1. Verfahren zum Betreiben eines Elektromotors mit wenigstens zwei Motorklemmen (U, V, W), die über eine Steuereinrichtung (S) angesteuert werden, mit den Schritten:
a) Kurzschließen von wenigstens zwei der Motorklemmen (U, V, W) des Elektromotors durch die Steuereinrichtung (S);
b) Messen der Motorphasenströme (I_{U}, I_{V}, I_{W}) an den kurzgeschlossenen Motorklemmen (U, V, W); und
c) Erkennen eines Stillstandes des Elektromotors, falls eine Größe und/oder eine Frequenz der in Schritt b) gemessenen Motorphasenströme (I_{U}, I_{V}, I_{W}) unter einem vorgegebenen Grenzwert liegt,
**dadurch gekennzeichnet, dass**
weiter ein Freigabesignal erzeugt wird, wenn in Schritt c) ein Stillstand des Elektromotors erkannt worden ist,
wobei dieses Freigabesignal bei einem Reset des Elektromotors und/oder seiner Steuereinrichtung (S) zurückgesetzt wird und zurückgesetzt wird, wenn der Elektromotor nach dem Stillstand wieder gedreht wird, sofern der Elektromotor nach dem Stillstand mit einer Drehzahl oberhalb eines vorgegebenen Grenzwerts wieder gedreht wird.

2. Verfahren nach Anspruch 1,
**dadurch gekennzeichnet,**
**dass** in Schritt a) alle Motorklemmen (U, V, W) des Elektromotors durch die Steuereinrichtung (S) kurzgeschlossen werden.

3. Verfahren nach Anspruch 1 oder 2,
**dadurch gekennzeichnet,**
**dass** in Schritt c) als Größe der Motorphasenströme (I_{U}, I_{V}, I_{W}) deren Effektivwert oder deren Mittelwert innerhalb eines Messfensters verwendet wird.

4. Verfahren nach einem der vorherigen Ansprüche,
**dadurch gekennzeichnet,**
**dass** das Messen der Motorphasenströme (I_{U}, I_{V}, I_{W}) in Schritt b) während eines Messfensters durchgeführt wird, welches mindestens so groß ist wie eine Periodendauer einer höchsten noch unkritischen Motordrehzahl.

5. Verfahren nach einem der vorherigen Ansprüche,
**dadurch gekennzeichnet,**
**dass** das Erkennen des Stillstandes des Elektromotors in Schritt c) nur dann erfolgt, falls die Summe aller in Schritt b) gemessenen Motorphasenströme (I_{U}, I_{V}, I_{W}) im Wesentlichen gleich Null ist.

6. Verfahren nach einem der vorherigen Ansprüche,
**dadurch gekennzeichnet,**
**dass** die Steuereinrichtung (S) einen Frequenzumrichter mit einem Spannungszwischenkreis (D, T) aufweist; und
**dass** die Motorphasenströme (I_{U}, I_{V}, I_{W}) in einem Brückenzweig des Spannungszwischenkreises (D, T) gemessen werden.

7. Verfahren nach Anspruch 6,
**dadurch gekennzeichnet,**
**dass** die Motorklemmen (U, V, W) während der Messung der Motorphasenströme (I_{U}, I_{V}, I_{W}) in Schritt b) auf einen Pol (-HV, +HV) des Spannungszwischenkreises (D, T) geklemmt werden.

8. Verfahren nach Anspruch 7,
**dadurch gekennzeichnet,**
**dass** die Motorklemmen (U, V, W) während der Messung der Motorphasenströme (I_{U}, I_{V}, I_{W}) in Schritt b) auf den Pol (-HV, +HV) des Spannungszwischenkreises (D, T) geklemmt werden, der mit dem Brückenzweig des Spannungszwischenkreises verbunden ist, in dem die Motorphasenströme (I_{U}, I_{V}, I_{W}) gemessen werden.

9. Verfahren nach Anspruch 7 oder 8,
**dadurch gekennzeichnet,**
**dass** die Motorklemmen (U, V, W) zum Abgleichen von Strommessmitteln (M_{U}, M_{V}, M_{W}) zum Messen der Motorphasenströme (I_{U}, I_{V}, I_{W}) auf den Pol (-HV, +HV) des Spannungszwischenkreises (D, T) geklemmt werden, der mit dem Brückenzweig des Spannungszwischenkreises verbunden ist, in dem die Motorphasenströme (I_{U}, I_{V}, I_{W}) nicht gemessen werden.

10. Verfahren nach einem der vorherigen Ansprüche,
**dadurch gekennzeichnet,**
**dass** die Frequenz der Motorphasenströme (I_{U}, I_{V}, I_{W}) in Schritt c) in einer oder in mehreren Motorphasen oder aus einem zeitlichen Abstand von mindestens zwei Strommesspunkten zwischen mindestens zwei Motorphasen bestimmt wird.

11. Vorrichtung zum Betreiben eines Elektromotors mit wenigstens zwei Motorklemmen (U, V, W), mit einer Steuereinrichtung (S) zum Ansteuern des Elektromotors, die Strommessmittel (M_{U}, M_{V}, M_{W}) aufweist und zum Durchführen des Verfahrens nach einem der Ansprüche 1 bis 10 ausgebildet ist.

## Claims

1. Method for operating an electric motor having at least two motor terminals (U, V, W) which are actuated via a control device (S), having the steps:
a) short circuiting at least two of the motor terminals (U, V, W) of the electric motor by means of the control device (S);
b) measuring the motor phase currents (Iu, Iv, Iw) at the short-circuit of the motor terminals (U, V, W); and
c) detecting a stationary state of the electric motor if a variable and/or a frequency of the motor phase currents (Iu, Iv, Iw) which is measured in step b) is below a predefined limiting value,
**characterized in that**
an enable signal is also generated if a stationary state of the electric motor has been detected in step c),
wherein this enable signal is reset when the electric motor and/or its control device (S) are/is reset, and is reset if the electric motor is turned again after the stationary state, insofar as the electric motor is turned again with a rotation speed above a predefined limiting value after the stationary state.

2. Method according to Claim 1,
**characterized**
**in that** in step a) all of the motor terminals (U, V, W) of the electric motor are short-circuited by the control device (S).

3. Method according to Claim 1 or 2
**characterized**
**in that** in step c) the route mean square or the mean value of the motor phase currents (Iu, Iv, Iw) within a measuring window is used as the variable of the motor phase currents (Iu, Iv, Iw).

4. Method according to one of the preceding claims,
**characterized**
**in that** the measurement of the motor phase currents (Iu, Iv, Iw) in step b) is carried out during a measuring window which is at least twice as large as the period length or a maximum still uncritical motor rotational speed.

5. Method according to one of the preceding claims,
**characterized**
**in that** the detection of the stationary state of the electric motor in step c) takes place only when the sum of all the motor phase currents (Iu, Iv, Iw) measured in step b) is essentially equal to zero.

6. Method according to one of the preceding claims,
**characterized**
**in that** the control device (S) has a frequency converter with a voltage intermediate circuit (D, T); and
**in that** the motor phase currents (Iu, Iv, Iw) are measured in a bridge branch of the voltage intermediate circuit (D, T).

7. Method according to Claim 6,
**characterized**
**in that** during the measurement of the motor phase currents (Iu, Iv, Iw) in step b) the motor terminals (U, V, W) are clamped to a pole (-HV, +HV) of the voltage intermediate circuit (D, T).

8. Method according to Claim 7,
**characterized**
**in that** during the measurement of the motor phase currents (Iu, Iv, Iw) in step b) the motor terminals (U, V, W) are clamped to the pole (-HV, +HV) of the voltage intermediate circuit (D, T) which is connected to the bridge branch of the voltage intermediate circuit, in which the motor phase currents (Iu, Iv, Iw) are measured.

9. Method according to Claim 7 or 8,
**characterized**
**in that** the motor terminals (U, V, W) for compensating current measuring means (Mu, Mv, Mw) for measuring the motor phase currents (Iu, Iv, Iw) are clamped to the pole (-HV, +HV) of the voltage intermediate circuit (D, T) which is connected to the bridge branch of the voltage intermediate circuit in which the motor phase currents (Iu, Iv, Iw) are not measured.

10. Method according to one of the preceding claims,
**characterized**
**in that** the frequency of the motor phase currents (Iu, Iv, Iw) in step c) is determined in one or more motor phases or from a time interval of at least two current measuring points between at least two motor phases.

11. Device for operating an electric motor with at least two motor terminals (U, V, W), where a control device (S) for actuating the electric motor which has current measuring means (Mu, Mv, Mw) and is designed to carry out the method according to one of Claims 1 to 10.

## Revendications

1. Procédé pour faire fonctionner un moteur électrique comprenant au moins deux bornes de moteur (U, V, W), lesquelles sont excitées par le biais d'un dispositif de commande (S), comprenant les étapes suivantes :
a) court-circuitage d'au moins deux des bornes de moteur (U, V, W) du moteur électrique par le dispositif de commande (S) ;
b) mesure des courants de phase de moteur (I_{U}, I_{V}, I_{W}) aux bornes de moteur (U, V, W) court-circuitées ; et
c) reconnaissance d'une immobilité du moteur électrique dans le cas où une grandeur et/ou une fréquence des courants de phase de moteur (I_{U}, I_{V}, I_{W}) mesurés à l'étape b) sont inférieures à une valeur limite prédéfinie,
**caractérisé en ce que**
un signal de validation est en outre généré si une immobilité du moteur électrique a été reconnue à l'étape c),
ce signal de validation étant réarmé lors d'une réinitialisation du moteur électrique et/ou du dispositif de commande (S) et étant réarmé lorsque le moteur électrique tourne de nouveau après l'immobilité, sous réserve que le moteur électrique, après l'immobilité, tourne de nouveau avec une vitesse de rotation supérieure à une valeur limite prédéfinie.

2. Procédé selon la revendication 1, **caractérisé en ce qu'**à l'étape a), toutes les bornes de moteur (U, V, W) du moteur électrique sont court-circuitées par le dispositif de commande (S).

3. Procédé selon la revendication 1 ou 2, **caractérisé en ce qu'**à l'étape c), la grandeur utilisée des courants de phase de moteur (I_{U}, I_{V}, I_{W}) est leur valeur effective ou leur valeur moyenne au sein d'une fenêtre de mesure.

4. Procédé selon l'une des revendications précédentes, **caractérisé en ce que** la mesure des courants de phase de moteur (I_{U}, I_{V}, I_{W}) à l'étape b) est effectuée pendant une fenêtre de mesure qui est au moins de la même taille qu'une durée de période d'une vitesse de rotation de moteur maximale encore non critique.

5. Procédé selon l'une des revendications précédentes, **caractérisé en ce que** la reconnaissance de l'immobilité du moteur électrique à l'étape c) n'est effectuée que lorsque la somme de tous les courants de phase de moteur (I_{U}, I_{V}, I_{W}) mesurés à l'étape b) est sensiblement égale à zéro.

6. Procédé selon l'une des revendications précédentes, **caractérisé en ce**
**que** le dispositif de commande (S) possède un convertisseur de fréquence pourvu d'un circuit intermédiaire de tension (D, T) ; et
**que** les courants de phase de moteur (I_{U}, I_{V}, I_{W}) sont mesurés dans une branche de pont du circuit intermédiaire de tension (D, T).

7. Procédé selon la revendication 6, **caractérisé en ce que** les bornes de moteur (U, V, W), pendant la mesure des courants de phase de moteur (I_{U}, I_{V}, I_{W}) à l'étape b), sont connectées à un pôle (-HV, +HV) du circuit intermédiaire de tension (D, T).

8. Procédé selon la revendication 7, **caractérisé en ce que** les bornes de moteur (U, V, W), pendant la mesure des courants de phase de moteur (I_{U}, I_{V}, I_{V}) à l'étape b), sont connectées au pôle (-HV, +HV) du circuit intermédiaire de tension (D, T) qui est relié à la branche de pont du circuit intermédiaire de tension dans laquelle sont mesurés les courants de phase de moteur (I_{U}, I_{V}, I_{W}).

9. Procédé selon la revendication 7 ou 8, **caractérisé en ce que** les bornes de moteur (U, V, W), en vue d'équilibrer des moyens de mesure de courant (M_{U}, M_{V}, M_{W}) destinés à mesurer les courants de phase de moteur (I_{U}, I_{V}, I_{W}), sont connectées au pôle (-HV, +HV) du circuit intermédiaire de tension (D, T) qui est relié à la branche de pont du circuit intermédiaire de tension dans laquelle ne sont pas mesurés les courants de phase de moteur (I_{U}, I_{V}, I_{W}).

10. Procédé selon l'une des revendications précédentes, **caractérisé en ce que** la fréquence des courants de phase de moteur (I_{U}, I_{V}, I_{W}) à l'étape c) est déterminée dans une ou plusieurs phases de moteur ou à partir d'un écart dans le temps d'au moins deux points de mesure du courant entre au moins deux phases de moteur.

11. Arrangement pour faire fonctionner un moteur électrique comprenant au moins deux bornes de moteur (U, V, W), comprenant un dispositif de commande (S) destiné à exciter le moteur électrique, lequel possède des moyens de mesure de courant (M_{U}, M_{V}, M_{W}) et est configuré pour mettre en œuvre le procédé selon l'une des revendications 1 à 10.
